(19) Europäisches Patentamt

European Patent Office

Office européen des brevets

(11) **EP 1 996 803 B1**

(12) **EUROPEAN PATENT SPECIFICATION**

(45) Date of publication and mention
of the grant of the patent:
**28.04.2010 Bulletin 2010/17**

(51) Int Cl.:
***F01N 9/00*** *(2006.01)*  ***F02D 41/02*** *(2006.01)*
***F02M 25/07*** *(2006.01)*

(21) Application number: **07734076.8**

(22) Date of filing: **15.03.2007**

(86) International application number:
**PCT/IB2007/000747**

(87) International publication number:
**WO 2007/107873 (27.09.2007 Gazette 2007/39)**

(54) **EXHAUST PURIFICATION DEVICE OF INTERNAL COMBUSTION ENGINE, AND CONTROL METHOD THEREOF**

ABGASREINIGUNGSVORRICHTUNG FÜR VERBRENNUNGSMOTOR UND STEUERVERFAHREN DAFÜR

DISPOSITIF D'ÉPURATION DES GAZ D'ÉCHAPPEMENT DE MOTEUR À COMBUSTION INTERNE ET PROCÉDÉ DE COMMANDE DE CELUI-CI

(84) Designated Contracting States:
**DE FR GB IT**

(30) Priority: **17.03.2006 JP 2006074400**

(43) Date of publication of application:
**03.12.2008 Bulletin 2008/49**

(73) Proprietor: **Toyota Jidosha Kabushiki Kaisha Toyota-shi, Aichi 471-8571 (JP)**

(72) Inventor: **ONO, Tomoyuki Aichi-ken 471-8571 (JP)**

(74) Representative: **Intes, Didier Gérard André et al Cabinet Beau de Loménie 158, rue de l'Université 75340 Paris Cedex 07 (FR)**

(56) References cited:
**EP-A1- 1 382 812     JP-A- 2005 069 207 US-A1- 2005 217 250**

## Description

### 1. Field of the Invention

The invention relates to an exhaust purification device of an internal combustion engine and a control method thereof as disclosed in US 2005/0217250.

### 2. Description of Related Art

In an exhaust purification device of an internal combustion engine equipped with an EGR (exhaust gas recirculation) passageway that connects an exhaust passageway downstream of a particulate filter and an intake passageway downstream of an air flow meter, a technology that determines the presence/absence of the clogging of the particulate filter on the basis of the differential pressure between the upstream side and the downstream side of the particulate filter is disclosed in Japanese Patent Application Publication No. JP-A-2005-69207.

However, if the degree of opening of an EGR valve provided in an EGR passageway is changed, the amount of exhaust that passes through the particulate filter changes. Therefore, the differential pressure between the upstream side and the downstream side of the particulate filter changes, so that there is a possibility of error in the determination regarding the clogging of the particulate filter.

## SUMMARY OF THE INVENTION

It is an object of the invention to provide a technology capable of more accurately determining the presence/absence of the clogging of a particulate filter in an exhaust purification device of the internal combustion engine.

An exhaust purification device of an internal combustion engine according to the invention includes: a particulate filter that is provided in an exhaust passageway and that traps a particulate matter in exhaust; intake air amount detection means for detecting an amount of fresh air flowing in an intake passageway; gas supply means for supplying a gas to the intake passageway that is on a downstream side of the intake air amount detection means and on an upstream side of the particulate filter; exhaust flow calculation means for calculating an amount of flow of exhaust passing through the particulate filter based on the amount of the gas supplied and the amount of fresh air detected; differential pressure detection means for detecting a differential pressure between the upstream side and the downstream side of the particulate filter in the exhaust passageway; and clogging determination means for determining whether the particulate filter is clogged based on the amount of flow of exhaust calculated and the differential pressure detected.

There is a correlation between the amount of flow of exhaust passing through the particulate filter, the amount of fresh air detected by the intake air amount detection means, and the amount of gas supplied by the gas supply means. For example, as the amount of fresh air decreases, the amount of flow of exhaust also decreases. Besides, for example, as the amount of gas supplied by the gas supply means decreases, the amount of flow of exhaust decreases. From the foregoing relationship, the exhaust flow calculation means calculates the amount of flow of exhaust passing through the particulate filter on the basis of the amount of gas supplied by the gas supply means and the intake air amount detected by the intake air amount detection means.

When the particulate filter traps particulate matter, the passage resistance against exhaust passing through the particulate filter becomes greater. Therefore, there is a correlation between the differential pressure between the upstream side and the downstream side of the particulate filter detected by the differential pressure detection means, and the amount of particulate matter trapped on the particulate filter. Besides, when the passage resistance against exhaust passing through the particulate filter becomes greater, the amount of flow of exhaust passing through the particulate filter decreases, and therefore the differential pressure detected by the differential pressure detection means becomes smaller. From these relationship, the clogging determination means determines whether the particulate filter is clogged on the basis of the amount of flow of exhaust calculated by the exhaust flow calculation means, and the differential pressure detected by the differential pressure detection means.

As for the aforementioned clogging determination, it may also be determined whether or not the clogging has occurred in the particulate filter, and the amount of particulate matter trapped on the particulate filter may be estimated.

In the exhaust purification device of the internal combustion engine, the gas supply means may be an EGR device that has an EGR passageway that connects the exhaust passageway downstream of the particulate filter and the intake passageway downstream of the intake air amount detection means, and an EGR valve that is provided in the EGR passageway and that changes a passageway cross-sectional area of the EGR passageway. The amount of the gas supplied by the gas supply means may be the amount of an EGR gas detected by EGR gas amount detection means for detecting the amount of the EGR gas flowing in the EGR passageway.

When the amount of the EGR gas flowing in the EGR passageway is changed by operating the EGR valve, the amount of flow of exhaust passing through the particulate filter correspondingly changes. The value obtained by summing the EGR gas amount flowing in the EGR passageway and the amount of fresh air is the amount of flow of exhaust passing through the particulate filter. Specifically, the exhaust flow calculation means calculates the amount of flow of exhaust passing through the particulate filter on the basis of the amount of the EGR gas detected by the EGR gas amount detection means, and the amount of fresh air detected by the intake air amount detection means.

Besides, since the amount of flow of exhaust passing through the particulate filter and the differential pressure between upstream side and the downstream side of the particulate filter have a correlation with the amount of particulate matter trapped on the particulate filter, the knowledge of the amount of flow of exhaust and the differential pressure allows the detection of the clogging of the particulate filter.

In the foregoing aspect, the exhaust purification device may further include a turbocharger that has a turbine in the exhaust passageway, and a compressor in the intake passageway. The EGR passageway may be a low-pressure EGR passageway that connects the exhaust passageway downstream of the turbine and the intake passageway upstream of the compressor.

The pressure in the exhaust passageway downstream of the turbine is close to the atmospheric pressure although it is higher than the atmospheric pressure. Besides, the pressure in the intake passageway upstream of the compressor is lower than the atmospheric pressure. Therefore, the pressure of the EGR gas flowing in the low-pressure EGR passageway is low in comparison with the case where the exhaust passageway upstream of the turbine and the intake passageway downstream of the compressor are connected.

In the case where the EGR gas flows in the low-pressure EGR passageway, the amount of exhaust combining the amount of the EGR gas and the amount fresh air passes through the particulate filter. In this case, too, the clogging of the particulate filter can be detected.

The EGR gas amount detection means may detect the amount of flow of gas in the low-pressure EGR passageway from at least the differential pressure between the passageway on the upstream side of the EGR valve and the passageway on the downstream side of the EGR valve, and a degree of opening of the EGR valve.

When it is determined by the clogging determination means whether the particulate filter is clogged, the degree of opening of the EGR valve may be made smaller than when it is not determined whether the particulate filter is clogged.

If the degree of opening of the EGR valve is made smaller, the EGR gas amount decreases. Therefore, the amount of flow of exhaust passing through the particulate filter approaches the amount of fresh air. This makes it possible to decrease the effect that the EGR gas has on the amount of flow of exhaust passing through the particulate filter, so that the accuracy of the clogging determination can be improved. Furthermore, by fully closing the EGR valve, the amount of fresh air and the amount of flow of exhaust become equal, so that the accuracy of the clogging determination can be further improved.

In the foregoing aspect, when the clogging determination means determines whether the particulate filter is clogged, the degree of opening of the EGR valve may be fixed.

If the degree of opening of the EGR valve changes, the amount of flow of exhaust passing through the particulate filter changes. Due to this, there is possibility of making an error in the determination regarding the clogging by the clogging determination means. According to the foregoing aspect, by fixing the degree of opening of the EGR valve, the fluctuation in the EGR gas amount flowing in the EGR passageway can be restrained, and therefore the accuracy of the clogging determination can be improved. Incidentally, when the degree of opening of the EGR valve is fixed, it may be fixed in the fully closed state.

The exhaust purification device may further include a high-pressure EGR passageway that connects the exhaust passageway upstream of the particulate filter and the intake passageway downstream of the intake air amount detection means, and a high-pressure EGR valve that changes the passageway cross-sectional area of the high-pressure EGR passageway. If the amount of the EGR gas flowing in the EGR passageway is changed when the clogging determination means determines whether the particulate filter is clogged, the EGR gas amount flowing in the high-pressure EGR passageway may be changed by the high-pressure EGR valve so that the EGR gas amount supplied into a cylinder of the internal combustion engine is constant.

If the amount of EGR gas flowing in the EGR passageway is decreased, the accuracy of the clogging determination can be improved, but the EGR gas amount supplied into the cylinder decreases. However, if the EGR gas is caused to flow into the high-pressure EGR passageway so as to compensate for the decrease in the amount of EGR gas flowing in the EGR passageway, the EGR gas amount supplied into the cylinder can be kept constant. This makes it possible to restrain, for example, the generation of NOx.

In the foregoing aspect, when it is determined by the clogging determination means whether the particulate filter is clogged, the EGR valve may be set at a degree of opening that is not the fully closed state. The exhaust flow calculation means may estimate the amount of flow of exhaust passing through the particulate filter based on the amount of fresh air detected by the intake air amount detection means and the amount of the EGR gas detected by the EGR gas amount detection means, and the clogging determination means may determine whether the particulate filter is clogged based on the amount of flow of exhaust estimated by the exhaust flow calculation means and the differential pressure detected by the differential pressure detection means.

If the degree of opening of the EGR valve changes, the EGR gas amount flowing in the EGR passageway also changes. However, even in the case where the degree of opening of the EGR valve is changing with the elapse of time, the current amount of flow of exhaust can be determined as the current amount of fresh air and an estimated EGR gas amount provided that the EGR gas amount can be estimated from one moment to another. Due to this, even when the amount of EGR gas fluctuates because the degree of opening of the EGR valve is not fixed, the clogging determination on the particulate filter can be performed with good accuracy.

In the foregoing aspect, determination by the clogging determination means as to whether the particulate filter is clogged may be performed when at least one of (i) a condition that the internal combustion engine is in a steady state, (ii) a condition that temperature of the particulate filter is within a predetermined range, and (iii) a condition that the vehicle has traveled a predetermined distance, is met.

The exhaust purification device of the internal combustion engine in accordance with the foregoing aspect is able to more accurately perform the clogging determination on the particulate filter.

A control method of an exhaust purification device of an internal combustion engine according to the invention is for an exhaust purification device of an internal combustion engine that includes: a particulate filter that is provided in an exhaust passageway and that traps a particulate matter in exhaust; intake air amount detection means for detecting an amount of fresh air flowing in an intake passageway; gas supply means for supplying a gas to the intake passageway that is on a downstream side of the intake air amount detection means and on an upstream side of the particulate filter; and differential pressure detection means for detecting a differential pressure between the upstream side and the downstream side of the particulate filter in the exhaust passageway. In the control method of the exhaust purification device of the internal combustion engine, an amount of flow of exhaust passing through the particulate filter is calculated based on the amount of the gas supplied and the amount of fresh air detected, and it is determined whether the particulate filter is clogged based on the amount of flow of exhaust calculated and the differential pressure detected.

In the control method, the gas supply means may be an EGR device that has an EGR passageway that connects the exhaust passageway downstream of the particulate filter and the intake passageway downstream of the intake air amount detection means, an EGR valve that is provided in the EGR passageway and that changes a passageway cross-sectional area of the EGR passageway, and EGR gas amount detection means for detecting an amount of an EGR gas flowing in the EGR passageway. The amount of the gas supplied by the gas supply means may be the amount of the EGR gas detected by the EGR gas amount detection means.

BRIEF DESCRIPTION OF THE DRAWINGS

The foregoing features and advantages of the invention will become more apparent from the following description of example embodiments with reference to the accompanying drawings, in which the same or corresponding portions are denoted by the same reference numerals and wherein:

FIG 1 is a diagram schematically showing an overall construction of an internal combustion engine and its intake-exhaust system to which an exhaust gas purification device of an internal combustion engine in accordance with an embodiment of the invention is applied;
FIG 2 is a flowchart showing the flow of determination regarding particulate filter clogging according to a first embodiment of the invention;
FIG 3 is a flowchart showing the flow of determination regarding particulate filter clogging according to a second embodiment of the invention;
FIG 4 is a flowchart showing the flow of determination regarding particulate filter clogging according to a third embodiment of the invention; and
FIG. 5 is another flowchart showing the flow of determination regarding particulate filter clogging according to a third embodiment of the invention.

DETAILED DESCRIPTION OF THE EXAMPLE EMBODIMENTS

Example embodiments of the exhaust purification device of an internal combustion engine in accordance with the invention will be described hereinafter with reference to the drawings.

i. First embodiment

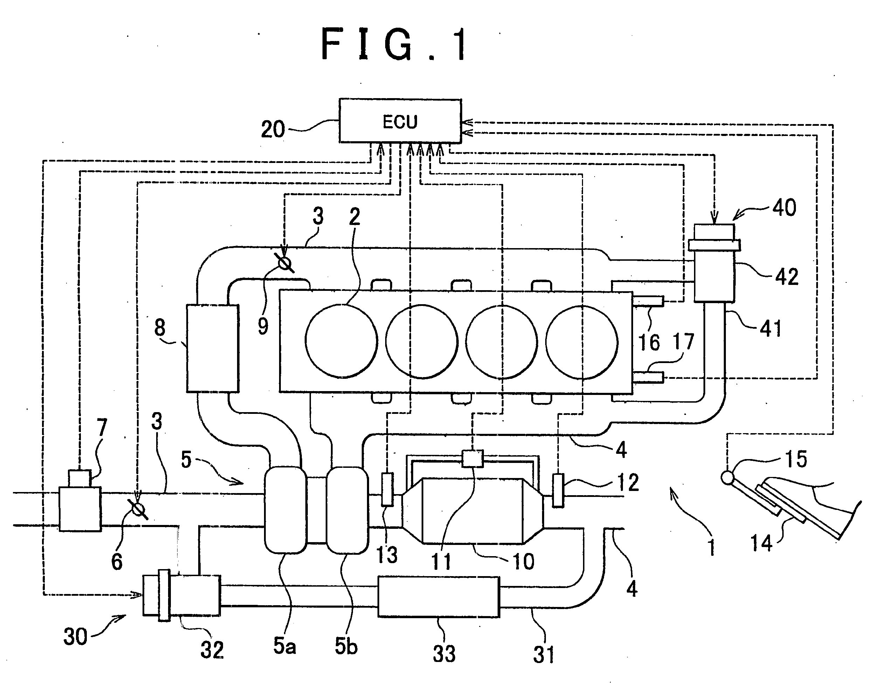

An internal combustion engine 1 shown in FIG. 1 is a water-cooled four-stroke diesel engine that has four cylinders 2.

An intake pipe 3 and an exhaust pipe 4 are connected to the internal combustion engine 1. An intermediate portion of the intake pipe 3 is provided with a compressor housing 5a of a turbocharger 5 that acts using energy of exhaust as a drive source. The intake pipe 3 upstream of the compressor housing 5a is provided with a first throttle 6 that adjusts the amount of flow of intake flowing in the intake pipe 3. The first throttle 6 is opened and closed by an electric actuator. The intake pipe 3 upstream of the first throttle 6 is provided with an air flow meter 7 that outputs a signal that is in accordance with the amount of flow of intake flowing in the intake pipe 3. The intake air amount of the internal combustion engine 1 is measured by the air flow meter 7. In this embodiment, the air flow meter 7 corresponds to intake air amount detection means in the invention.

The intake pipe 3 downstream of the compressor housing 5a is provided with an intercooler 8 that performs heat exchange between the intake and external air. The intake pipe 3 downstream of the intercooler 8 is provided with a second throttle 9 that adjust the amount of flow of intake flowing in the intake pipe 3. The second throttle 9 is opened and closed by an electric actuator.

On the other hand, an intermediate portion of the exhaust pipe 4 is provided with a turbine housing. 5b of the turbocharger 5. The exhaust pipe 4 downstream of the turbine housing 5b is provided with a particulate filter (hereinafter, simply referred to as "filter") 10. A storage reduction type NOx catalyst (hereinafter, simply referred to as "NOx catalyst") is supported on the filter 10. This filter traps particulate matter in exhaust. The NOx catalyst stores oxides of nitrogen (NOx) from exhaust when the oxygen concentration in the exhaust flowing into the NOx catalyst is high, and releases stored NOx when the oxygen concentration in the exhaust flowing into the NOx catalyst has dropped. On the occasion, if a reducing component, such as hydrocarbon (HC), carbon monoxide (CO), etc., is present in the exhaust, the NOx released from the NOx catalyst is reduced. In this description, the term "storage (or store)" is used in the meaning of holding a substance (solid, liquid, gas molecules) in at least one of the manners that include adsorption, adhesion, absorption, trapping, occlusion, etc.

A differential pressure sensor 11 that measures the pressure difference between the upstream side and the downstream side of the filter 10 is attached to the filter 10. The amount of particulate matter (hereinafter, referred to also as "PM") deposited on the filter 10 can be detected by the differential pressure sensor 11. In this embodiment, the differential pressure sensor 11 corresponds to differential pressure detection means in the invention. In the exhaust pipe 4 downstream of the filter 10, an exhaust temperature sensor 12 that detects the temperature of the exhaust flowing in the exhaust pipe 4 is attached. The temperature of the filter 10 is detected by the exhaust temperature sensor 12.

The internal combustion engine 1 is equipped with a low-pressure EGR device 30 that recirculates a portion of the exhaust that flows in the exhaust pipe 4, to the intake pipe 3 at low pressure. The low-pressure EGR device 30 has a low-pressure EGR passageway 31, a low-pressure EGR valve 32, and an EGR cooler 33. The low-pressure EGR passageway 31 connects the exhaust pipe 4 on the downstream side of the filter 10 and the intake pipe 3 that extends upstream of the compressor housing 5a and downstream of the first throttle 6. Via the low-pressure EGR passageway 31, exhaust is recirculated at low pressure. In this embodiment, the exhaust recirculated via the low-pressure EGR passageway 31 is termed low-pressure EGR gas. Besides, the amount of low-pressure EGR gas that flows through the low-pressure EGR passageway 31 is adjusted by adjusting the passageway cross-sectional area of the low-pressure EGR passageway 31 with changes in the degree of opening of the low-pressure EGR valve 32. The EGR cooler 33 drops the temperature of low-pressure EGR gas by causing heat exchange between the low-pressure EGR gas passing through the EGR cooler 33 and cooling water of the internal combustion engine 1. In this embodiment, the low-pressure EGR device 30 corresponds to gas supply means in the invention.

The internal combustion engine 1 is also equipped with a high-pressure EGR device 40 that recirculates a portion of the exhaust that flows in the exhaust pipe 4, to the intake pipe 3 at high pressure. This high-pressure EGR device 40 has a high-pressure EGR passageway 41, and a high-pressure EGR valve 42. The high-pressure EGR passageway 41 connects the exhaust pipe 4 on the upstream side of the turbine housing 5b and the intake pipe 3 downstream of the second throttle 9. Via the high-pressure EGR passageway 41, exhaust is recirculated at high pressure. In this embodiment, the exhaust recirculated via the high-pressure EGR passageway 41 is termed high-pressure EGR gas. As the passageway cross-sectional area of the high-pressure EGR passageway 41 changes with changes in the degree of opening of the high-pressure EGR valve 42, the amount of high-pressure EGR gas that flows through the high-pressure EGR passageway 41 is adjusted.

An exhaust pressure sensor 13 that detects the pressure of exhaust is attached to the exhaust pipe 4 between the turbine housing 5b and the filter 10.

The internal combustion engine 1 constructed as described above is provided with an ECU 20 that is an electronic control unit for controlling the internal combustion engine 1. This ECU 20 controls the state of operation of the internal combustion engine 1 in accordance with the operation condition of the internal combustion engine 1 and a driver's request. Besides the aforementioned sensors, an accelerator operation amount sensor 15 that outputs an electric signal in accordance with the amount of the driver's depression of an accelerator pedal 14 to detect the engine load, a crank position sensor 16 that detects the engine rotation speed, and a cooling water temperature sensor 17 that detects the temperature of cooling water of the internal combustion engine 1 are connected to the ECU 20 via electric wiring, so that the output signals of these various sensors are input to the ECU 20. Furthermore, the first throttle 6, the second throttle 9, the low-pressure EGR valve 32 and the high-pressure EGR valve 42 are connected to the ECU 20 via electric wiring. The ECU 20 controls these appliances and the like.

In this embodiment, the ECU 20 performs a clogging determination on the filter 10. If the ECU 20 determines that the filter 10 is clogged, the ECU 20 performs a restoration process of the filter 10. When performing the clogging determination on the filter 10, the ECU 20 fixes the low-pressure EGR valve 32 to a fully closed state. When the degree of opening of the low-pressure EGR valve 32 is fixed to the fully closed state, the amount of flow of exhaust passing through the filter 10 can easily be estimated on the basis of the intake air amount detected by the air flow meter 7. Therefore, the accuracy of the clogging determination can be improved.

In this embodiment, the clogging determination on the filter 10 is performed as follows. Herein, the cross-sectional area of the exhaust pipe 4 immediately upstream of the filter 10 is represented by A0, and the flow speed of exhaust therein is represented by U0. Besides, the clogging of the filter 10 with PM is, considered as throttling, and the cross-sectional area of the filter 10 is represented by A1, and the flow speed of exhaust in the filter 10 is represented by Ucat.

If the foregoing relationship is applied to the Bernoulli theorem, Equation 1 can be obtained.

$$\rho U_0^{\ 2}/2 + P_0 = \rho U_{cat}^{\ 2}/2 + P_1 \quad \text{...Equation 1}$$

In the equation, P0 is the pressure of exhaust immediately upstream of the filter 10, and P1 is the pressure of exhaust immediately downstream of the filter 10. It is assumed that the liquid density $\rho$ is constant. Since the relationship of Equation 2 holds between the flow speed of exhaust and the cross-sectional area, the differential pressure $\Delta P$ between the upstream side and the downstream side of the filter 10 (hereinafter, referred to as "across-filter differential pressure") can be expressed as in Equation 3.

$$U_0 A_0 = U_{cat} A_1 \quad \text{...Equation 2}$$

$$\Delta P = (P_0 - P_1)$$
$$= \rho U_{cat}^{\ 2}/2 - \rho U_0^{\ 2}/2$$
$$= \rho U_{cat}^{\ 2}/2 - \rho U_{cat}^{\ 2}(A_1/A_0)^2/2 \quad \text{...Equation 3}$$

Then, Equation 3 can be re-written as Equation 4.

$$\Delta P/U_{cat}^{\ 2} = \rho(1 - (A_1/A_0)^2)/2 \quad \text{...Equation 4}$$

In this equation, $\Delta P/U_{cat}^2$ is a value that correlates with the degree of clogging of the filter 10.

In this embodiment, if the $\Delta P/U_{cat}^2$ is greater than a predetermined value R1, the ECU 20 determines that the filter 10 is clogged, and then carries out the restoration process of the filter 10.

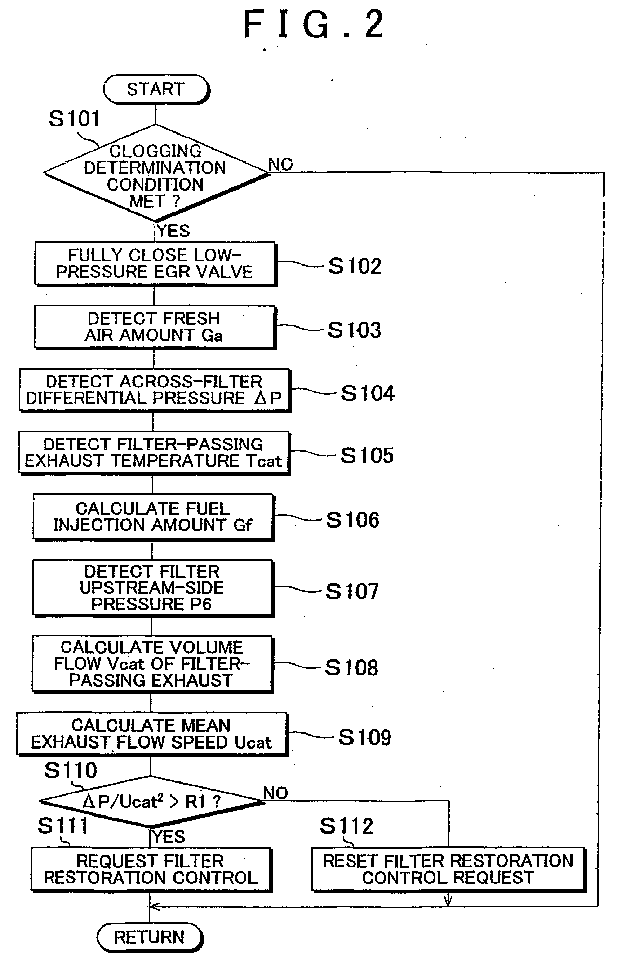

The flow of the clogging determination on the filter 10 in this embodiment will next be described. FIG. 2 is a flowchart showing the flow of the clogging determination on the filter 10 according to this embodiment. The routine of this flowchart is repeatedly executed at every predetermined time.

In step S 101, it is determined whether or not a condition for determining the presence of the clogging of a filter 10 is met. In this step, it is determined whether or not a state suitable to perform the clogging determination on the filter 10 has been assumed. For example, it is determined whether or not the internal combustion engine 1 is in a steady state, or whether or not the temperature of the filter 10 is in a predetermined range. It is also allowable to determine whether or not the vehicle has traveled such a predetermined distance that PM can deposit to a large amount. If an affirmative determination is made in step S101, the process proceeds to step S102. On the other hand, if a negative determination is made, the routine is ended.

In step S 102, the ECU 20 controls the low-pressure EGR valve 32 to the fully closed state. That is, the ECU 20 controls the valve 32 so that the exhaust passing through the filter 10 will not contain the low-pressure EGR gas. This facilitates the calculation of the amount of flow of exhaust passing through the filter 10.

In step S 103, the air flow meter 7 detects a fresh air amount Ga.

In step S104, the differential pressure sensor 11 detects the across-filter differential pressure ΔP.

In step S105, the exhaust temperature sensor 12 detects the temperature of the exhaust passing through the filter 10 (hereinafter, referred to as "filter-passing exhaust temperature") Tcat. The filter-passing exhaust temperature is used to convert the mass flow of exhaust passing through the filter 10 into a volume flow.

In step S 106, the ECU 20 calculates the fuel injection amount Gf. The fuel injection amount Gf is the amount of fuel injected into the cylinders 2, and is calculated on the basis of the engine rotation speed, the engine load, etc.

In step S107, the exhaust pressure sensor 13 detects the pressure P6 in the exhaust pipe 4 upstream of the filter 10 (hereinafter, referred to as "filter upstream-side pressure").

In step S 108, the ECU 20 calculates the volume flow Vcat of exhaust passing through the filter 10. The volume flow Vcat can be obtained through the following equation (equation of state of gas). In the equation, R is the gas constant.

$$V_{cat} = (G_a + G_f) \cdot R \cdot T_{cat} / P_6 \quad \text{...Equation 5}$$

In this embodiment, the ECU 20 that finds the volume flow Vcat corresponds to exhaust flow calculation means.

In step S109, the ECU 20 calculates a mean flow speed Ucat of exhaust passing through the filter 10 (hereinafter, referred to as "mean exhaust flow speed"). The mean exhaust flow speed Ucat is calculated by dividing the volume flow Vcat calculated in step S108 by the cross-sectional area A of the filter 10. The cross-sectional area A of the filter 10 is found beforehand.

In step S110, the ECU 20 determines whether or not $\Delta P/Ucat^2$ is greater than the predetermined value R1. As mentioned above, $\Delta P/Ucat^2$ has a correlation with the degree of clogging of the filter 10. The predetermined value R1 is found beforehand through experiments or the like, as a lower limit value of the value at the time of occurrence of the clogging of the filter 10. If an affirmative determination is made in step S110, the process proceeds to step S111. On the other hand, if a negative determination is made, the process proceeds to step S 112.

In this embodiment, the ECU 20 performing the process of step S110 corresponds to clogging determination means in the invention.

In step S111, the ECU 20 requests a control for performing the restoration process of the filter 10. For example, the ECU 20 sets a restoration process control request flag to 1. This restoration process control request flag is set to 1 when there is a need to perform the restoration process of the filter 10, and is set to 0 when there is no need to perform the restoration process of the filter 10.

In step S 112, the ECU 20 resets the request for the control for performing the restoration process of the filter 10. For example, the restoration process control request flag is set to 0.

Thus, since the ECU 20 controls the low-pressure EGR valve 32 to the fully closed state at the time of determining whether the filter 10 is clogged, the clogging determination on the filter 10 can be more accurately performed.

Although in this embodiment the ECU 20 controls the low-pressure EGR valve 32 to the fully closed state at the time of determining whether the filter 10 is clogged, the degree of opening of the low-pressure EGR valve 32 may instead be controlled to a fixed degree of opening that is other than the fully closed state. In this case, the amount of low-pressure EGR gas flowing through the low-pressure EGR passageway 31 is directly measured or is estimated. Then, the amount of low-pressure EGR gas and the fresh air amount detected by the air flow meter 7 are combined to calculate the amount of flow of exhaust passing through the filter 10.

Furthermore, in the case where the low-pressure EGR device 30 is not provided but, for example, a system for supplying secondary air to the filter 10 is provided, the supply of secondary air may be stopped when the clogging determination on the filter 10 is performed. Besides, the amount of supply of secondary air may be constant.

ii. Second embodiment

In this embodiment, the EGR gas amount supplied into the cylinders 2 is kept constant by supplying an amount of high-pressure EGR gas that corresponds to the amount of decrease of the low-pressure EGR gas.

It is to be noted herein that when the degree of opening of the low-pressure EGR valve 32 is changed, the EGR gas amount supplied into the cylinders 2 changes. For example, when the low-pressure EGR valve 32 is controlled to the fully closed state in first embodiment, the supply of the low-pressure EGR gas into the cylinders 2 discontinues. Therefore, there is possibility of lack of the EGR gas in the cylinders.

In second embodiment, on the other hand, the degree of opening of the high-pressure EGR valve 42 is controlled so that the EGR gas amount supplied into the cylinders 2 is constant. In reality, the degree of opening of the high-pressure EGR valve 42 is controlled so that the intake air amount is constant. What is taken into the cylinders 2 includes fresh air and EGR gas. If the state of operation of the internal combustion engine 1 does not change, the amount of fresh air and EGR gas combined does not change. Therefore, the EGR gas amount and the fresh air amount have a relationship in which, for example, if the EGR gas amount decreases, the fresh air amount increases. That is, the EGR gas amount can be kept constant by controlling the degree of opening of the high-pressure EGR valve 42 so that the amount of fresh air, that is, the intake air amount measured by the air flow meter 7, is constant.

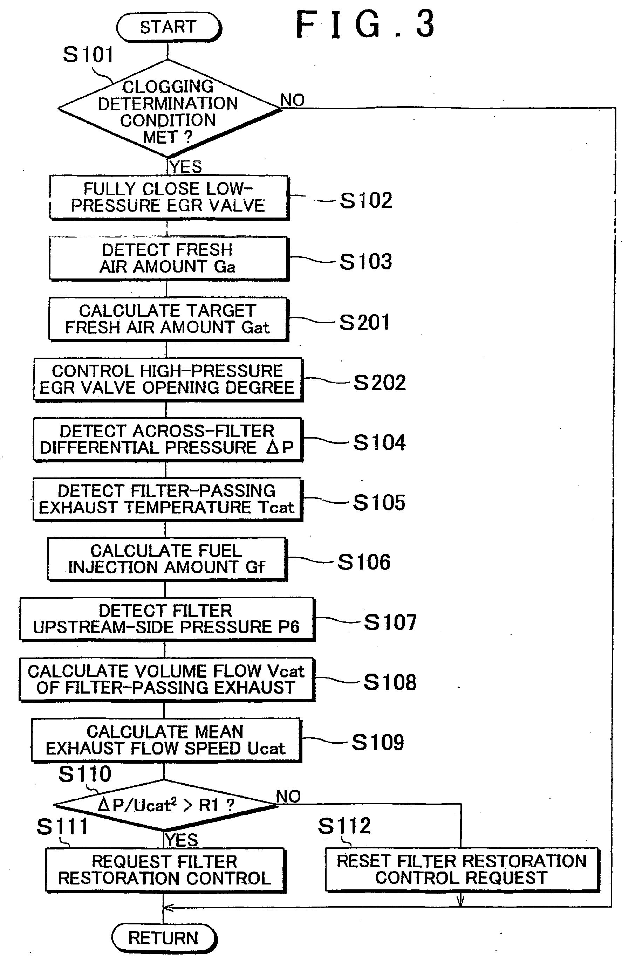

FIG. 3 is a flowchart showing the flow of the clogging determination on the filter 10 in accordance with this embodiment. The routine of this flowchart is repeatedly executed at every predetermined time. The steps of executing the same processes as those executed in the routine shown in the flowchart of FIG. 2 are affixed with the same reference characters, and the description thereof will be omitted.

In step S201, the ECU 20 calculates a target fresh air amount Gat. The target fresh air amount Gat is calculated on the basis of the rotation speed and the load of the internal combustion engine 1. The relationship between the target fresh air amount Gat and the engine rotation speed and the engine load is found and presented in the form of a map beforehand through experiments or the like, and is stored in the ECU 20.

In step S202, the ECU 20 controls the degree of opening of the high-pressure EGR valve 42. The degree of opening of the high-pressure EGR valve 42 is feedback-controlled so that the fresh air amount Ga detected in step S103 equals the target fresh air amount Gat calculated in step S201. It is to be noted herein that the ECU 20 controls the degree of opening of the high-pressure EGR valve 42 in the increasing direction if the ECU 20 controls the degree of opening of the low-pressure EGR valve 32 in the decreasing direction.

Since the high-pressure EGR gas through the high-pressure EGR passageway 41 flows from the exhaust pipe 4 upstream of the filter 10 to the intake pipe 3 downstream of the air flow meter 7, the high-pressure EGR gas has substantially no influence on the relationship between the fresh air amount and the amount of flow of exhaust passing through the filter 10. Therefore, at the time of the clogging determination on the filter 10, it is riot necessary to take the high-pressure EGR gas amount into account.

In this manner, if the degree of opening of the low-pressure EGR valve 32 is changed while the ECU 20 performing the clogging determination on the filter 10, the degree of opening of the high-pressure EGR valve 42 is correspondingly changed, so that the EGR gas amount supplied into the cylinders 2 can be kept constant. This makes it possible to restrain the generation of NOx or the like while the ECU 20 is performing the clogging determination on the filter 10.

iii. Third embodiment

In this embodiment, while the degree of opening of the low-pressure EGR valve 32 is changing with the elapse of time, the low-pressure EGR gas amount at the current degree of opening is estimated. By adding the current intake air amount measured by the air flow meter 7 to the estimated value, the amount of flow of exhaust passing through the filter 10 with the current degree of opening is calculated. Specifically, the sum of the low-pressure EGR gas amount and the fresh air amount is equal to the amount of flow of exhaust passing through the filter 10. Therefore, even while the degree of opening of the low-pressure EGR valve 32 is changing with the elapse of time, the amount of flow of exhaust passing through the filter 10 with the current degree of opening can be calculated by estimating the low-pressure EGR gas amount that corresponds to the degree of opening and detecting the fresh air amount provided at the time of that degree of opening. Incidentally, the amount of flow of the low-pressure EGR gas is estimated from the differential pressure between the upstream side and the downstream side of the low-pressure EGR valve 32, the degree of opening of the low-pressure EGR valve 32, etc.

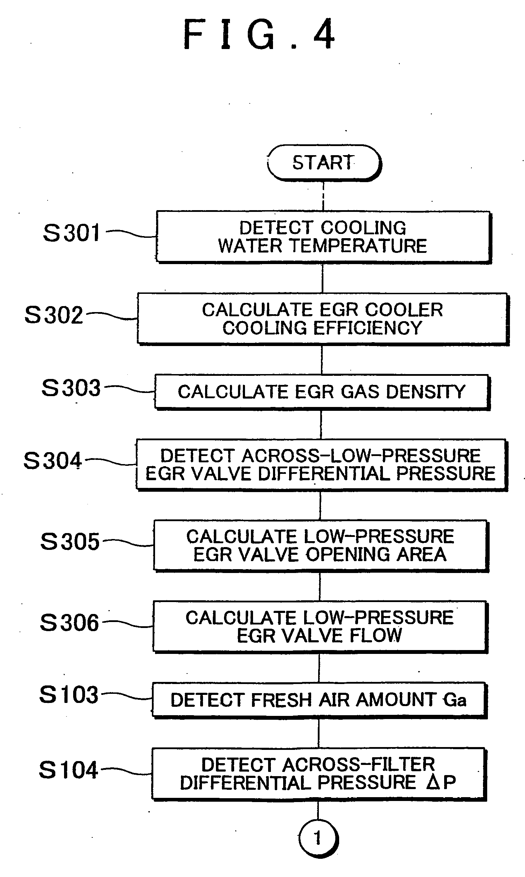

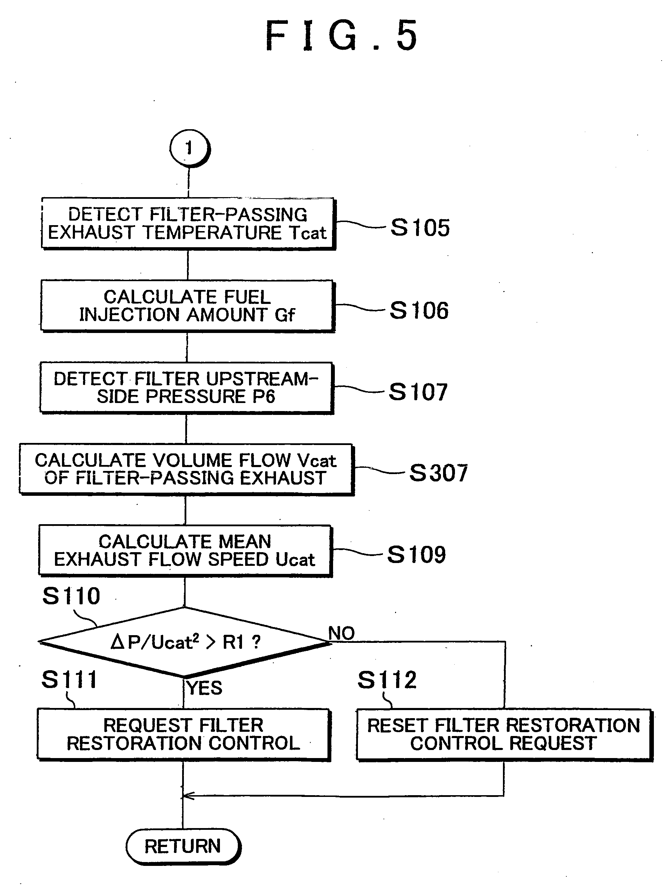

FIGS. 4 and 5 are a flowchart showing the flow of the clogging determination on the filter 10 in accordance with this embodiment. The routine of this flowchart is repeatedly executed at every predetermined time. The steps of executing the same processes as those executed in the routine shown in the flowchart of FIG 2 are affixed with the same reference characters, and the description thereof will be omitted.

In step S301, the cooling water temperature sensor 17 detects the temperature of the cooling water of the internal combustion engine 1.

In step S302, the ECU 20 calculates the cooling efficiency of the EGR cooler 33. The cooling efficiency of the EGR cooler 33 has a correlation with the cooling water temperature. Therefore, for example, a relationship between the cooling water temperature and the cooling efficiency of the EGR cooler 33 is found and presented in a map beforehand through experiments or the like, and is stored in the ECU 20. By substituting the cooling water temperature found in step S301 in this map, the cooling efficiency of the EGR cooler 33 can be obtained.

In step S303, the density of the low-pressure EGR gas is calculated. If the pressure and the temperature of the low-pressure EGR gas are known, the density of the low-pressure EGR gas is obtained by substituting the pressure arid temperature values in the equation of state (equation of state of gas).

The temperature of the low-pressure EGR gas can be calculated, for example, on the basis of the exhaust temperature T7 detected by the exhaust temperature sensor 12, the cooling efficiency of the EGR cooler 33 and the amount of temperature drop that occurs when the low-pressure EGR gas flows through the low-pressure EGR passageway 31. These relationships may be found beforehand through experiments or the like. Furthermore, the temperature of the low-pressure EGR gas may also be found, for example, by using a sensor.

Furthermore, the pressure of the low-pressure EGR gas is detected, for example, by a pressure sensor attached to the low-pressure EGR passageway 31. Besides, the pressure in the intake pipe 3 connected to the low-pressure EGR passageway 31 and the pressure of the low-pressure EGR gas may be equal. The temperature and the pressure may be estimated from other sensors, or the state of operation of the internal combustion engine 1.

In step S304, the differential pressure between the upstream side and the downstream side of the low-pressure EGR valve 32 (hereinafter, referred to as "across-low-pressure EGR valve differential pressure") is detected. The across-low-pressure EGR valve differential pressure can be obtained by, for example, using a differential pressure sensor that is attached to the low-pressure EGR passageway 31 so as to detect the differential pressure between the upstream side and the downstream side of the low-pressure EGR valve 32.

In step S305, the ECU 20 calculates the opening area of the low-pressure EGR valve 32. For example, the relationship between the opening area and the command value when the ECU 20 controls the degree of opening of the low-pressure EGR valve 32 is found and presented in a map beforehand. Then, by substituting a command value, the opening area can be obtained.

In step S306, the ECU 20 calculates the amount of low-pressure EGR gas Vegr passing through the low-pressure EGR valve 32.

Equation 4 is converted as in the following equation.

$$Ucat = \sqrt{2\Delta P / (\rho(1-(A_1/A_0)^2))} \quad \text{...Equation 6}$$

Then, by replacing Ucat with the flow speed Uegr of the low-pressure EGR gas, and replacing the A1 with the opening area Aegr of the low-pressure EGR valve 32, the following equation can be obtained.

$$Uegr = \sqrt{2\Delta P_{egr} / \rho_{egr}} \times \sqrt{1/(1-(A_{egr}/A_0)^2)} \quad \text{...Equation 7}$$

The amount Vegr of low-pressure EGR gas passing through the low-pressure EGR valve 32 can be obtained as in Equation 8.

$$V_{egr} = U_{egr} A_{egr}$$

$$= A_0 A_{egr} \sqrt{2\Delta P_{egr} / (\rho_{egr}(A_0^2 - A_{egr}^2))} \quad \text{...Equation 8}$$

In this embodiment, the ECU 20 calculating the amount Vegr of low-pressure EGR gas corresponds to EGR gas amount detection means.

In step S307, the ECU 20 calculates the amount Vcat of flow of exhaust passing through the filter 10. The amount Vcat of flow of exhaust is calculated through Equation 9 as a value obtained by summing the amount of flow of low-pressure EGR gas passing through the low-pressure EGR valve 32, and the amount of flow of fresh air.

$$V_{cat} = V_{egr} + (G_a + G_f) \cdot R \cdot T_{cat} / P_6 \quad \text{...Equation 9}$$

Thus, even in the case where the low-pressure EGR valve 32 is at a degree of opening other than the fully closed state and is changing with the elapse of time, the amount of flow of exhaust passing through the filter 10 can be found in accordance with the degree of opening of the low-pressure EGR valve 32, so that the clogging determination on the filter 10 can be performed in a wider range of the state of operation.

**Claims**

1. An exhaust purification device of an internal combustion engine (1), comprising:

a particulate filter (10) that is provided in an exhaust passageway (4) and that traps a particulate matter in exhaust;

intake air amount detection means (7) for detecting an amount of fresh air flowing in an intake passageway (3);

gas supply means (30) for supplying a gas to the intake passageway that is on a downstream side of the intake air amount detection means (7) and on an upstream side of the particulate filter (10);

exhaust flow calculation means (20) for calculating an amount of flow of exhaust passing through the particulate filter based on the amount of the gas supplied and the amount of fresh air detected;

differential pressure detection means (11) for detecting a differential pressure between the upstream side and the downstream side of the particulate filter in the exhaust passageway; and

clogging determination means (20) for determining whether the particulate filter is clogged based on the amount of flow of exhaust calculated and the differential pressure detected;

a turbocharger (5) that has a turbine in the exhaust passageway (4), and a compressor in the intake passageway,

a high-pressure EGR passageway (41) that connects the exhaust passageway (4) upstream of the particulate filter (10) and the intake passageway (3) downstream of the intake air amount detection means (7); and

a high-pressure EGR valve (42) that changes the passageway cross-sectional area of the high-pressure EGR passageway (41), **characterized in that**

the gas supply means is an EGR device (30) that has an EGR passageway (31) that connects the exhaust passageway (4) downstream of the particulate filter (10) and the intake passageway (3) downstream of the intake air amount detection means (7), and an EGR valve (32) that is provided in the EGR passageway (31) and that changes a passageway cross-sectional area of the EGR passageway; **in that**

the amount of the gas supplied by the gas supply means is the amount of an EGR gas detected by EGR gas amount detection means (20) for detecting the amount of the EGR gas flowing in the EGR passageway; **in that**

the EGR passageway (31) is a low-pressure EGR passageway that connects the exhaust passageway (4) downstream of the turbine and the intake passageway (3) upstream of the compressor; **in that**

when it is determined by the clogging determination means (20) whether the particulate filter (10) is clogged, the degree of opening of the EGR valve is made smaller than when it is not determined whether the particulate filter is clogged, and the EGR gas amount flowing in the high-pressure EGR passageway is changed by the high-pressure EGR valve (42) so that the EGR gas amount supplied into a cylinder of the internal combustion engine (1) is constant.

2. The exhaust purification device of the internal combustion engine according to claim 1, wherein the clogging determination means (20) estimates an amount of the particulate matter trapped on the particulate filter (10).

3. The exhaust purification device of the internal combustion engine according to claim 1 or 2, wherein the EGR gas amount detection means (20) detects the amount of flow of gas in the low-pressure EGR passageway (31) from at least the differential pressure between the passageway on the upstream side of the EGR valve (32) and the passageway on the downstream side of the EGR valve, and a degree of opening of the EGR valve.

4. The exhaust purification device of the internal combustion engine according to any one of claims 1 to 3, wherein when the clogging determination means determines whether the particulate filter (10) is clogged, the degree of opening of the EGR valve is fixed.

5. The exhaust purification device of the internal combustion engine according to claim 4, wherein the degree of opening of the EGR valve is fixed to a fully closed state when it is determined by the clogging determination means (20) whether the particulate filter (10) is clogged.

6. The exhaust purification device of the internal combustion engine according to any one of claims 1 to 4, wherein when it is determined by the clogging determination means (20) whether the particulate filter (10) is clogged, the degree of opening of the EGR valve is set to a degree of opening that is not the fully closed state, and the exhaust flow calculation means (20) estimates the amount of flow of exhaust passing through the particulate filter (10) based on the amount of fresh air detected by the intake air amount detection means (7) and the amount of the EGR gas detected by the EGR gas amount detection means (20), and the clogging determination means (20) determines whether the particulate filter (10) is clogged based on the amount of flow of exhaust estimated by the exhaust flow calculation means (20) and the differential pressure detected by the differential pressure detection means (11).

7. The exhaust purification device of the internal combustion-engine according to any one of claims to 6, wherein determination by the clogging determination means (20) as to whether the particulate filter (10) is clogged is performed when at least one of (i) a condition that the internal combustion engine (1) is in a steady state, (ii) a condition that temperature of the particulate filter (10) is within a predetermined range, and (iii) a condition that the vehicle has traveled a predetermined distance, is met.

8. A control method of an exhaust purification device of an internal combustion engine (1) which includes:

a particulate filter (10) that is provided in an exhaust passageway (4) and that traps a particulate matter in exhaust;
intake air amount detection means (7) for detecting an amount of fresh air flowing in an intake passageway (3);
gas supply means (30) for supplying a gas to the intake passageway (3) that is on a downstream side of the intake air amount detection means (7) and on an upstream side of the particulate filter (10);
differential pressure detection means (11) for detecting a differential pressure between the upstream side and the downstream side of the particulate filter (10) in the exhaust passageway (4),
a turbocharger (5) that has a turbine in the exhaust passageway (4), and a compressor in the intake passageway,
a high-pressure EGR passageway (41) that connects the exhaust passageway (4) upstream of the particulate filter (10) and the intake passageway (3) downstream of the intake air amount detection means (7), and
a high-pressure EGR valve (42) that changes the passageway cross-sectional area of the high-pressure EGR passageway (41);
the control method being **characterized in that**
the EGR passageway (31) is a low-pressure EGR passageway that connects the exhaust passageway (4) downstream of the turbine and the intake passageway (3) upstream of the compressor;

**in that** it comprises:

calculating an amount of flow of exhaust passing through the particulate filter (10) based on the amount of the gas supplied and the amount of fresh air detected; and
determining whether the particulate filter is clogged based on the amount of flow of exhaust calculated and the-differential pressure detected; **in that**
the gas supply means is an EGR device (30) that has an EGR passageway (31) that connects the exhaust passageway (4) downstream of the particulate fitter (10) and the intake passageway (3) downstream of the intake air amount detection means (7), an EGR valve (32) that is provided in the EGR passageway (31) and that changes a passageway cross-sectional area of the EGR passageway; **in that**
the amount of the gas supplied by the gas supply means (30) is the amount of an EGR gas detected by EGR gas amount detection means (20) for detecting the amount of the EGR gas flowing in the EGR passageway; and **in that**
when it is determined by the clogging determination means (20) whether the particulate filter (10) is clogged, the degree of opening of the EGR valve is made smaller than when it is not determined whether the particulate filter is clogged, and the EGR gas amount flowing in the high-pressure EGR passageway is changed by the high-pressure EGR valve (42) so that the EGR gas amount supplied into a cylinder of the internal combustion engine (1) is constant.

**Patentansprüche**

1. Abgasreinigungsvorrichtung für eine Verbrennungskraftmaschine (1), umfassend:

einen Rußfilter (10), der in einem Absaugkanal (4) vorgesehen ist und im Abgas befindliche Schwebstoffteilchen einfängt,
ein Ansaugluftmengen-Detektierungsmittel (7) zum Erfassen einer in einem Ansaugkanal (3) strömenden Frischluftmenge,
ein Gaszuführmittel (30) zum Zuführen eines Gases zu dem Ansaugkanal, der sich auf einer stromab gelegenen Seite des Ansaugluftmengen-Detektierungsmittels (7) und auf einer stromauf gelegenen Seite des Rußfilters (10) befindet,
ein Abgasströmungs-Berechnungsmittel (20) zum Berechnen einer den Rußfilter durchströmenden Abgasströmungsmenge basierend auf der zugeführten Gasmenge und der detektierten Frischluftmenge,
ein Differenzdruck-Detektierungsmittel (11) zum Erfassen eines Differenzdrucks zwischen der stromauf gelegenen Seite und der stromab gelegenen Seite des Rußfilters (10) in dem Absaugkanal, und

ein Verstopfungs-Bestimmungsmittel (20) zur Bestimmung, ob der Rußfilter verstopft ist, basierend auf der berechneten Abgas-Strömungsmenge und dem erfaßten Differenzdruck,

einen Turbolader (5), der in dem Absaugkanal (4) eine Turbine und in dem Ansaugkanal einen Verdichter aufweist,

einen AGR-Hochdruckkanal (41), der den Absaugkanal (4) stromauf des Rußfilters (10) und den Ansaugkanal (3) stromab des Ansaugluftmengen-Detektierungsmittels (7) verbindet, und

ein AGR-Hochdruckventil (42), das die Kanalquerschnittsfläche des AGR-Hochdruckkanals (41) ändert,

**dadurch gekennzeichnet,**

**daß** das Gaszuführmittel eine AGR-Vorrichtung (30) ist, die einen AGR-Kanal (31), der den Absaugkanal (4) stromab des Rußfilters (10) und den Ansaugkanal (3) stromab des Ansaugluftmengen-Erfassungsmittels (7) verbindet, und ein AGR-Ventil (32) aufweist, das in dem AGR-Kanal (31) vorgesehen ist und eine Kanalquerschnittsfläche des AGR-Hochdruckkanals ändert,

**daß** die von dem Gaszuführmittel zugeführte Gasmenge die Menge eines AGR-Gases ist, die von einem AGR-Gasmengen-Detektierungsmittel (20) zum Erfassen der in dem AGR-Kanal strömenden AGR-Gasmenge erfaßt wird,

**daß** der AGR-Kanal (31) ein AGR-Niederdruckkanal ist, der den Absaugkanal (4) stromab der Turbine und den Ansaugkanal (3) stromauf des Kompressors verbindet, und

**daß** der Öffnungsgrad des AGR-Ventils dann, wenn durch das Verstopfungsbestimmungsmittel (20) bestimmt wird, ob der Rußfilter (10) verstopft ist, kleiner als dann eingestellt wird, wenn nicht bestimmt wird, ob der Rußfilter verstopft ist, und die in dem AGR-Hochdruckkanal strömende AGR-Gasmenge von dem AGR-Hochdruckventil (42) so geändert wird, daß die AGR-Gasmenge, die in einen Zylinder der Verbrennungskraftmaschine (1) geführt wird, konstant ist.

2. Abgasreinigungsvorrichtung für die Verbrennungskraftmaschine nach Anspruch 1, wobei das Verstopfungsbestimmungsmittel (20) eine Menge der in dem Rußfilter (10) aufgefangenen Schwebstoffteilchen schätzt.

3. Abgasreinigungsvorrichtung für die Verbrennungskraftmaschine nach Anspruch 1 oder 2, wobei das AGR-Gasmengen-Detektierungsmittel (20) die Gasströmungsmenge in dem AGR-Niederdruckkanal (31) mindestens aus dem Differenzdruck zwischen dem Kanal auf der stromauf gelegenen Seite des AGR-Ventils (32) und dem Kanal auf der stromab gelegenen Seite des AGR-Ventils sowie einem Öffnungsgrad des AGR-Ventils erfaßt.

4. Abgasreinigungsvorrichtung für die Verbrennungskraftmaschine nach einem der Ansprüche 1 bis 3, wobei der Öffnungsgrad des AGR-Ventils festgelegt wird, wenn das Verstopfungsbestimmungsmittel bestimmt, ob der Rußfilter (10) verstopft ist.

5. Abgasreinigungsvorrichtung für die Verbrennungskraftmaschine nach Anspruch 4, wobei der Öffnungsgrad des AGR-Ventils auf einen vollständig geschlossenen Zustand festgelegt wird, wenn das Verstopfungsbestimmungsmittel (20) bestimmt, ob der Rußfilter (10) verstopft ist.

6. Abgasreinigungsvorrichtung für die Verbrennungskraftmaschine nach einem der Ansprüche 1 bis 4, wobei der Öffnungsgrad des AGR-Ventils dann, wenn das Verstopfungsbestimmungsmittel (20) bestimmt, ob der Rußfilter (10) verstopft ist, auf einen Öffnungsgrad eingestellt wird, der nicht der vollständig geschlossene Zustand ist, und das Abgasströmungs-Berechnungsmittel (20) die den Rußfilter (10) durchlaufende Abgasströmungsmenge auf der Basis der von dem Ansaugluftmengen-Detektierungsmittel (7) erfaßten Frischluftmenge und der von dem AGR-Gasmengen-Detektierungsmittel erfaßten AGR-Gasmenge schätzt, und das Verstopfungsbestimmungsmittel auf der Basis der von dem Abgasströmungsmengen-Berechnungsmittel (20) geschätzten Abgasströmungsmenge und dem von dem Differenzdruck-Detektierungsmittel (11) erfaßten Differenzdruck bestimmt, ob der Rußfilter (10) verstopft ist.

7. Abgasreinigungsvorrichtung für die Verbrennungskraftmaschine nach einem der Ansprüche 1 bis 6, wobei die durch das Verstopfungsbestimmungsmittel (20) erfolgende Bestimmung, ob der Rußfilter (10) verstopft ist, dann erfolgt, wenn zumindest eines der folgenden erfüllt ist: (i) eine Bedingung, daß sich die Verbrennungskraftmaschine (1) in stabilem Zustand befindet, (ii) eine Bedingung, daß die Temperatur des Rußfilters (10) innerhalb einen vorgegebenen Bereichs liegt, und (iii) eine Bedingung, daß das Fahrzeug eine vorgegebene Strecke gefahren ist.

8. Steuerungsverfahren für eine Abgasreinigungsvorrichtung einer Verbrennungskraftmaschine (1), umfassend:

einen Rußfilter (10), der in einem Absaugkanal (4) vorgesehen ist und im Abgas befindliche Schwebstoffteilchen einfängt,

ein Ansaugluftmengen-Detektierungsmittel (7) zum Erfassen einer in einem Ansaugkanal (3) strömenden Frischluftmenge,

ein Gaszuführmittel (30) zum Zuführen eines Gases zu dem Ansaugkanal (3), der sich auf einer stromab gelegenen Seite des Ansaugluftmengen-Detektierungsmittels (7) und auf einer stromauf gelegenen Seite des Rußfilters (10) befindet,

ein Differenzdruck-Detektierungsmittel (11) zum Erfassen eines Differenzdrucks zwischen der stromauf gelegenen Seite und der stromab gelegenen Seite des Rußfilters (10) in dem Absaugkanal (4), und

einen Turbolader (5), der in dem Absaugkanal (4) eine Turbine und in dem Ansaugkanal einen Verdichter aufweist,

einen AGR-Hochdruckkanal (41), der den Absaugkanal (4) stromauf des Rußfilters (10) und den Ansaugkanal (3) stromab des Ansaugluftmengen-Detektierungsmittels (7) verbindet, und

ein AGR-Hochdruckventil (42), das die Kanalquerschnittsfläche des AGR-Hochdruckkanals (41) ändert,

wobei das Steuerungsverfahren **dadurch gekennzeichnet ist,**

**daß** der AGR-Kanal (31) ein AGR-Niederdruckkanal ist, der den Absaugkanal (4) stromab der Turbine und den Ansaugkanal (3) stromauf des Kompressors verbindet,

**daß** es folgendes umfaßt:

Berechnen einer den Rußfilter (10) durchströmenden Abgasströmungsmenge basierend auf der zugeführten Gasmenge und der erfaßten Frischluftmenge und

Bestimmen, ob der Rußfilter verstopft ist, basierend auf der berechneten Abgasströmungsmenge und dem erfaßten Differenzdruck,

**daß** das Gaszuführmittel eine AGR-Vorrichtung (30) ist, die einen AGR-Kanal (31), der den Absaugkanal (4) stromab des Rußfilters (10) und den Ansaugkanal (3) stromab des Ansaugluftmengen-Erfassungsmittels (7) verbindet, und ein AGR-Ventil (32) aufweist, das in dem AGR-Kanal (31) vorgesehen ist und eine Kanalquerschnittsfläche des AGR-Hochdruckkanals ändert,

**daß** die von dem Gaszuführmittel (30) zugeführte Gasmenge die Menge eines AGR-Gases ist, die von dem AGR-Gasmengen-Detektierungsmittel (20) zum Erfassen der in dem AGR-Kanal strömenden AGR-Gasmenge erfaßt wird, und

**daß** der Öffnungsgrad des AGR-Ventils dann, wenn das Verstopfungsbestimmungsmittel (20) bestimmt, ob der Rußfilter (10) verstopft ist, kleiner als dann eingestellt wird, wenn nicht bestimmt wird, ob der Rußfilter verstopft ist, und die in dem AGR-Hochdruckkanal strömende AGR-Gasmenge von dem AGR-Hochdruckventil (42) so geändert wird, daß die AGR-Gasmenge, die in einen Zylinder der Verbrennungskraftmaschine (1) geführt wird, konstant ist.

## Revendications

1. Dispositif de purification d'échappement d'un moteur à combustion interne (1), comprenant :

un filtre à particules (10) qui est placé dans un passage d'échappement (4) et qui piège une matière particulaire dans l'échappement ;

des moyens de détection de quantité d'air d'admission (7) pour détecter une quantité d'air extérieur s'écoulant dans un passage d'admission (3) ;

des moyens d'alimentation en gaz (30) pour alimenter en gaz le passage d'admission qui est en aval des moyens de détection de quantité d'air d'admission (7) et en amont du filtre à particules (10) ;

des moyens de calcul de débit d'échappement (20) pour calculer un débit d'échappement passant à travers le filtre à particules d'après la quantité de gaz fournie et la quantité d'air extérieur détectée ;

des moyens de détection de pression différentielle (11) pour détecter une pression différentielle entre le côté amont et le côté aval du filtre à particules dans le passage d'échappement ; et

des moyens de détermination de colmatage (20) pour déterminer si le filtre à particules est colmaté d'après le débit d'échappement calculé et la pression différentielle détectée ;

un turbocompresseur (5) qui a une turbine dans le passage d'échappement (4), et un compresseur dans le passage d'admission,

un passage de RGE (recirculation des gaz d'échappement) haute pression (41) qui relie le passage d'échappement (4) en amont du filtre à particules (10) et le passage d'admission (3) en aval des moyens de détection de quantité d'air d'admission (7) ; et

une valve de RGE haute pression (42) qui change la surface de section de passage du passage de RGE haute pression (41), **caractérisé en ce que**

les moyens d'alimentation en gaz sont un dispositif de RGE (30) qui a un passage de RGE (31) qui relie le passage d'échappement (4) en aval du filtre à particules (10) et le passage d'admission (3) en aval des moyens de détection de quantité d'air d'admission (7), et une valve de RGE (32) qui est placée dans le passage de RGE (31) et qui change une surface de section de passage du passage de RGE ; **en ce que**

la quantité de gaz fournie par les moyens d'alimentation en gaz est la quantité d'un gaz de RGE détectée par des moyens de détection de quantité de gaz de RGE (20) pour détecter la quantité de gaz de RGE s'écoulant dans le passage de RGE ; **en ce que**

le passage de RGE (31) est un passage de RGE basse pression qui relie le passage d'échappement (4) en aval de la turbine et le passage d'admission (3) en amont du compresseur ; **en ce que**

quand il est déterminé par les moyens de détermination de colmatage (20) si le filtre à particules (10) est colmaté, le degré d'ouverture de la valve de RGE est rendu plus petit que quand il n'est pas déterminé si le filtre à particules est colmaté, et la quantité de gaz de RGE s'écoulant dans le passage de RGE haute pression est changée par la valve de RGE haute pression (42) de telle manière que la quantité de gaz de RGE introduite dans un cylindre du moteur à combustion interne (1) est constante.

2. Dispositif de purification d'échappement du moteur à combustion interne selon la revendication 1, dans lequel les moyens de détermination de colmatage (20) estiment une quantité de matière particulaire piégée sur le filtre à particules (10).

3. Dispositif de purification d'échappement du moteur à combustion interne selon la revendication 1 ou 2, dans lequel les moyens de détection de quantité de gaz de RGE (20) détectent le débit de gaz dans le passage de RGE basse pression (31) à partir d'au moins la pression différentielle entre le passage en amont de la valve de RGE (32) et le passage en aval de la valve de RGE, et un degré d'ouverture de la valve de RGE.

4. Dispositif de purification d'échappement du moteur à combustion interne selon l'une quelconque des revendications 1 à 3, dans lequel quand les moyens de détermination de colmatage déterminent si le filtre à particules (10) est colmaté, le degré d'ouverture de la valve de RGE est fixe.

5. Dispositif de purification d'échappement du moteur à combustion interne selon la revendication 4, dans lequel le degré d'ouverture de la valve de RGE est fixé à un état entièrement fermé quand il est déterminé par les moyens de détermination de colmatage (20) si le filtre à particules (10) est colmaté.

6. Dispositif de purification d'échappement du moteur à combustion interne selon l'une quelconque des revendications 1 à 4, dans lequel quand il est déterminé par les moyens de détermination de colmatage (20) si le filtre à particules (10) est colmaté, le degré d'ouverture de la valve de RGE est réglé à un degré d'ouverture qui n'est pas entièrement l'état fermé, et les moyens de calcul de débit d'échappement (20) estiment le débit d'échappement passant à travers le filtre à particules (10) d'après la quantité d'air extérieur détectée par les moyens de détection de quantité d'air d'admission (7) et la quantité de gaz de RGE détectée par les moyens de détection de quantité de gaz de RGE (20), et les moyens de détermination de colmatage (20) déterminent si le filtre à particules (10) est colmaté d'après le débit d'échappement estimé par les moyens de calcul de débit d'échappement (20) et la pression différentielle détectée par les moyens de détection de pression différentielle (11).

7. Dispositif de purification d'échappement du moteur à combustion interne selon l'une quelconque des revendications 1 à 6, dans lequel la détermination par les moyens de détermination de colmatage (20) du colmatage éventuel du filtre à particules (10) est réalisée quand au moins l'une des conditions suivantes est remplie : (i) le moteur à combustion interne (1) est dans un état stable, (ii) la température du filtre à particules (10) est dans une plage prédéterminée, et (iii) le véhicule a voyagé sur une distance prédéterminée.

8. Procédé de commande d'un dispositif de purification d'échappement d'un moteur à combustion interne (1) qui inclut :

un filtre à particules (10) qui est placé dans un passage d'échappement (4) et qui piège une matière particulaire dans l'échappement ;

des moyens de détection de quantité d'air d'admission (7) pour détecter une quantité d'air extérieur s'écoulant dans un passage d'admission (3) ;

des moyens d'alimentation en gaz (30) pour alimenter en gaz le passage d'alimentation qui est en aval des moyens de détection de quantité d'air d'admission (7) et en amont du filtre à particules (10) ;

des moyens de détection de pression différentielle (11) pour détecter une pression différentielle entre le côté amont et le côté aval du filtre à particules (10) dans le passage d'échappement (4),

un turbocompresseur (5) qui a une turbine dans le passage d'échappement (4), et un compresseur dans le passage d'admission,

un passage de RGE haute pression (41) qui relie le passage d'échappement (4) en amont du filtre à particules (10) et le passage d'admission (3) en aval des moyens de détection de quantité d'air d'admission (7) ; et

une valve de RGE haute pression (42) qui change la surface de section de passage du passage de RGE haute pression (41) ;

le procédé de commande étant **caractérisé en ce que**

le passage de RGE (31) est un passage de RGE basse pression qui relie le passage d'échappement (4) en aval de la turbine et le passage d'admission (3) en amont du compresseur ;

**en ce qu'**il comprend de

calculer un débit d'échappement passant à travers le filtre à particules (10) d'après la quantité de gaz fournie et la quantité d'air extérieur détectée ; et

déterminer si le filtre à particules est colmaté d'après le débit d'échappement calculé et la pression différentielle détectée ; **en ce que**

les moyens d'alimentation en gaz sont un dispositif de RGE (30) qui a un passage de RGE (31) qui relie le passage d'échappement (4) en aval du filtre à particules (10) et le passage d'admission (3) en aval des moyens de détection de quantité d'air d'admission (7), une valve de RGE (32) qui est placée dans le passage de RGE (31) et qui change une surface de section de passage du passage de RGE ; **en ce que**

la quantité de gaz fournie par les moyens d'alimentation en gaz (30) est la quantité d'un gaz de RGE détectée par des moyens de détection de quantité de gaz de RGE (20) pour détecter le débit de gaz de RGE dans le passage de RGE ; et **en ce que**

quand il est déterminé par les moyens de détermination de colmatage (20) si le filtre à particules (10) est colmaté, le degré d'ouverture de la valve de RGE est rendu plus petit que quand il n'est pas déterminé si le filtre à particules est colmaté, et le débit de gaz de RGE dans le passage de RGE haute pression est changé par la valve de RGE haute pression (42) de telle manière que la quantité de gaz de RGE introduite dans un cylindre du moteur à combustion interne (1) est constante.

# FIG.1

EP 1 996 803 B1

EP 1 996 803 B1

# F I G . 2

**START**

S101

CLOGGING DETERMINATION CONDITION MET ? — NO

YES

FULLY CLOSE LOW-PRESSURE EGR VALVE — S102

DETECT FRESH AIR AMOUNT Ga — S103

DETECT ACROSS-FILTER DIFFERENTIAL PRESSURE $\Delta P$ — S104

DETECT FILTER-PASSING EXHAUST TEMPERATURE Tcat — S105

CALCULATE FUEL INJECTION AMOUNT Gf — S106

DETECT FILTER UPSTREAM-SIDE PRESSURE P6 — S107

CALCULATE VOLUME FLOW Vcat OF FILTER-PASSING EXHAUST — S108

CALCULATE MEAN EXHAUST FLOW SPEED Ucat — S109

S110 $\Delta P/Ucat^2 > R1$ ? — NO

S111 YES

REQUEST FILTER RESTORATION CONTROL

S112 RESET FILTER RESTORATION CONTROL REQUEST

**RETURN**

17

# F I G . 3

```
            START

S101
         CLOGGING
        DETERMINATION        NO
         CONDITION
           MET ?

            YES

    FULLY CLOSE LOW-
    PRESSURE EGR VALVE    ──S102

      DETECT FRESH
      AIR AMOUNT Ga       ──S103

    CALCULATE TARGET
    FRESH AIR AMOUNT Gat  ──S201

    CONTROL HIGH-PRESSURE
   EGR VALVE OPENING DEGREE ──S202

    DETECT ACROSS-FILTER
   DIFFERENTIAL PRESSURE ΔP ──S104

    DETECT FILTER-PASSING
   EXHAUST TEMPERATURE Tcat ──S105

      CALCULATE FUEL
    INJECTION AMOUNT Gf   ──S106

       DETECT FILTER
   UPSTREAM-SIDE PRESSURE P6 ──S107

   CALCULATE VOLUME FLOW Vcat
   OF FILTER-PASSING EXHAUST ──S108

      CALCULATE MEAN
   EXHAUST FLOW SPEED Ucat ──S109

S110
          ΔP/Ucat² > R1 ?      NO

S111       YES                 S112

    REQUEST FILTER          RESET FILTER RESTORATION
   RESTORATION CONTROL         CONTROL REQUEST

            RETURN
```

# FIG.4

```
                    ┌─────────────┐
                    │    START    │
                    └──────┬──────┘
                           │
S301 ──┐   ┌───────────────────────────────┐
       └──→│      DETECT COOLING           │
           │     WATER TEMPERATURE         │
           └───────────────┬───────────────┘
                           │
S302 ──┐   ┌───────────────────────────────┐
       └──→│   CALCULATE EGR COOLER        │
           │     COOLING EFFICIENCY        │
           └───────────────┬───────────────┘
                           │
S303 ──┐   ┌───────────────────────────────┐
       └──→│   CALCULATE EGR GAS DENSITY   │
           └───────────────┬───────────────┘
                           │
S304 ──┐   ┌───────────────────────────────┐
       └──→│  DETECT ACROSS-LOW-PRESSURE   │
           │ EGR VALVE DIFFERENTIAL PRESSURE│
           └───────────────┬───────────────┘
                           │
S305 ──┐   ┌───────────────────────────────┐
       └──→│   CALCULATE LOW-PRESSURE      │
           │   EGR VALVE OPENING AREA      │
           └───────────────┬───────────────┘
                           │
S306 ──┐   ┌───────────────────────────────┐
       └──→│   CALCULATE LOW-PRESSURE      │
           │      EGR VALVE FLOW           │
           └───────────────┬───────────────┘
                           │
S103 ──┐   ┌───────────────────────────────┐
       └──→│  DETECT FRESH AIR AMOUNT Ga   │
           └───────────────┬───────────────┘
                           │
S104 ──┐   ┌───────────────────────────────┐
       └──→│    DETECT ACROSS-FILTER       │
           │  DIFFERENTIAL PRESSURE ΔP     │
           └───────────────┬───────────────┘
                           │
                        ┌──┴──┐
                        │  1  │
                        └─────┘
```

EP 1 996 803 B1

# FIG.5

```
        ( 1 )
          │
┌──────────────────────┐
│  DETECT FILTER-PASSING │ ── S105
│ EXHAUST TEMPERATURE Tcat│
└──────────────────────┘
          │
┌──────────────────────┐
│    CALCULATE FUEL      │ ── S106
│  INJECTION AMOUNT Gf   │
└──────────────────────┘
          │
┌──────────────────────┐
│  DETECT FILTER UPSTREAM-│ ── S107
│   SIDE PRESSURE P6     │
└──────────────────────┘
          │
┌──────────────────────┐
│ CALCULATE VOLUME FLOW Vcat│ ── S307
│  OF FILTER-PASSING EXHAUST│
└──────────────────────┘
          │
┌──────────────────────┐
│   CALCULATE MEAN       │ ── S109
│ EXHAUST FLOW SPEED Ucat│
└──────────────────────┘
```

S110

$\Delta P/Ucat^2 > R1$ ?   NO

S111 — YES          S112

REQUEST FILTER RESTORATION CONTROL

RESET FILTER RESTORATION CONTROL REQUEST

RETURN

**EP 1 996 803 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050217250 A
- JP 2005069207 A